# EUROPÄISCHE PATENTSCHRIFT

(11) **EP 2 119 842 B1**
(45) Veröffentlichungstag und Bekanntmachung des Hinweises auf die Patenterteilung: **09.08.2017**
(21) Anmeldenummer: 09006601.0
(22) Anmeldetag: 15.05.2009
(51) Int. Cl.: E04B 1/80

(54) **Dämmelement und Verfahren zum Herstellen des Dämmelements**
Insulation element and method for producing same
Elément d'isolation et procédé de fabrication d'un élément d'isolation

(30) Priorität: 16.05.2008 DE 102008023841
(43) Veröffentlichungstag der Anmeldung: 18.11.2009
(73) Patentinhaber: SAINT-GOBAIN ISOVER G+H AG, 67059 Ludwigshafen (DE)
(72) Erfinder: Dorn, Rainer, Dr., 76448 Durmersheim (DE)
(74) Vertreter: Bockhorni & Kollegen

(56) Entgegenhaltungen:
- EP-A1- 1 431 686
- WO-A1-03/002828
- DE-A1- 19 648 305
- US-A- 3 264 165
- US-A- 6 108 980

## Beschreibung

Die Erfindung betrifft ein Dämmelement gemäß dem Oberbegriff des Patentanspruches 1. Derartige Dämmelemente weisen eine äußere und eine innere Hülle auf, welche jeweils eine Füllkammer bilden. Die äußere Hülle ist vakuumdicht versiegelt. In der äußeren Hülle ist ein isolierendes erstes Füllmaterial eingebettet. Die innere Hülle ist in dem isolierenden ersten Füllmaterial der äußeren Hülle eingebettet. In der inneren Hülle ist ein isolierendes zweites Füllmaterial eingebettet.

Als Gebäudedämmung werden vorzugsweise Dämmelemente aus Mineralwolle oder Schäumen verwendet. Die Dämmwirkung dieser Dämmelemente hängt unter anderem von der in ihnen eingeschlossenen Luft oder Treibgasen ab. Wärmedämmelemente aus Mineralwolle sind üblicherweise aus Glas- oder Steinwollfasern gebildet, die mit Bindemitteln, insbesondere Phenolformaldehydharz, versehen sind, wobei der Bindemittelgehalt je nach Anwendung zwischen 2 und 7 Gewichtsprozent variieren kann.

Um zu einer erheblichen Verbesserung des Wärmedämmvermögens von Dämmelementen im Baubereich zu kommen, werden teil- oder vollständig evakuierte Dämmelemente eingesetzt. Jedoch haben sich diese Dämmelemente bislang nicht durchgesetzt. Gründe hierfür sind vor allem die hohen Anforderungen an die Handhabbarkeit und Belastbarkeit vor und während der Montage unter baustellenüblichen Bedingungen, sowie die Anforderungen an die Aufrechterhaltung des Ausgangsinnendrucks, in der Regel ein Vakuum, über übliche Sanierungszyklen oder Standzeiten von Gebäuden, beispielsweise über 30 Jahre.

Hingegen haben sich Vakuumisolierpaneele im Kühlgerätebau etabliert und werden dort als Dämmelemente vornehmlich in Kühlgerätewänden und Türen verwendet. Entscheidend hierfür ist, dass die aufgeführten die Anwendung derartiger Dämmelemente im Baubereich verhindernden Probleme hier von untergeordneter Bedeutung sind. Hauptanwendungsgebiete sind hierbei Kühlschränke und Kühltheken, wie sie beispielsweise in Supermärkten verwendet werden.

Generell sind diese Vakuumisolierpaneele aus einer Umhüllung aufgebaut, die einen Innenraum luftundurchlässig nach Außen abschließt, wobei jedoch geringe Diffusionsströme durch die Umhüllung bisher unvermeidbar sind. Aus diesen Diffusionsströmen resultiert ein Druckanstieg im Innenraum, der zu einem erheblichen Verlust des Wärmedämmvermögens führen kann. Üblicherweise ist der Innenraum mit einem Füllmaterial gefüllt, welches neben der mechanischen Abstützung gegen den Umgebungsdruck eine Minimierung der Wärmeübertragung durch Strahlung und durch Leitung des Füllmaterials selbst bewirkt. Um die für die Dämmwirkung entscheidende Aufrechterhaltung des Innendrucks über einen für die Anwendung erforderlichen Zeitraum zu gewährleisten, sind verschiedene Maßnahmen bekannt, bei kürzeren Zeiträumen insbesondere die Verwendung von Gettern, bei längeren Zeiträumen die regelmäßige Wiederherstellung des Vakuum durch Pumpsysteme. Ferner sind zum Erhöhen der Formstabilität des Dämmelements Stützsysteme bekannt. Die Stützsysteme können beispielsweise in Form von Waben oder Stützsäulen ausgebildet sein.

Aus der DE 690 33 433 T2 ist ein Vakuumwärmeisolierpaneel mit einer gasundurchlässigen Außenwand bekannt. Die gasundurchlässige Außenwand bildet eine abgedichtete Einfassung. Innerhalb der entleerten Einfassung sind ein Füllisoliermaterial und eine Getterstruktur angeordnet. Die Getterstruktur umfasst eine Substratschicht. Wenigstens eine Schicht aus Gettermaterial wird auf die Substratschicht aufgetragen. Auf das Gettermaterial wird eine Sperrschicht aufgebracht. Mindestens eine Substratschicht und eine Sperrschicht sind semipermeabel. Die Permeabilität der mindestens einen Substrat- und Sperrschicht ist so gewählt, dass ein Gebrauch der Getterstruktur für kurze Zeitspannen in einer offenen Umgebung möglich ist und dennoch das Durchdringen von Gasen in einem ausreichenden Maß möglich ist, so dass ein Gettern durch das Gettermaterial über relativ lange Zeitspannen erzielt wird. Als Füllmaterial werden unter anderem aufeinander geschichtete Folien aus fasrigem Material, wie etwa Glasfaserisolierung, verwendet, welche die auf vorbestimmte Vakuumgrade evakuierten Paneelwände stützen sollen.

Schließlich ist ein Vakuumisolationspanel bekannt (WO 03/002828 A1), welches nach dem Doppelkammerprinzip aufgebaut ist. Dieses Vakuumisolationspanel weist einen inneren Kern aus druckfester und mit Bindemittel versehener Glaswolle auf, wobei gewährleistet sein soll, dass die Glaswolle unter Vakuum bei Temperaturen bis 100 C° nicht ausgast. Dieser innere Kern aus Glaswolle ist in eine gasdichte Verbundfolie eingeschweißt, die mit einer Metall- insbesondere Aluminiumschicht als Diffusionssperre versehen sein kann. Die innere Hülle ist schließlich durch einen äußeren Kern aus Glaswolle umgeben, der wiederum in eine äußere gasdichte Hüllfolie eingeschweißt ist. Die innere Kammer ist unter Feinvakuum gesetzt, also auf 10⁻³ mbar - 1 mbar evakuiert, wohingegen die den inneren Kern umgebende äußere Kammer nur auf Grobvakuum, also etwa auf 1 mbar evakuiert ist. Aufgrund der Druckverhältnisse wird hierbei der äußere Kern aus Glaswolle auf wenige 0,01 mm zusammengepresst, sodass das Volumen der äußeren Kammer entsprechend gering ist. In Folge der geringen Druckdifferenz und der daraus resultierenden kleinen Gasdiffusion von der äußeren in die innere Vakuumkammer ist es möglich ist, für die innere Hülle preiswerte Kunststofffolien zu verwenden, welche entweder überhaupt nicht oder mit einer geringen Metallschicht versehen sind. Aufgrund des vergleichsweise hohen Innendrucks in der äußeren Füllkammer und deren geringem Volumen ist jedoch die Pufferwirkung der äußeren Füllkammer begrenzt, wobei die Pufferwirkung noch dadurch begrenzt wird, dass für die innere Hülle preiswerte Kunststofffolien verwendet werden, die in der Regel nur eine geringe Diffusionssperrwirkung aufweisen, so dass es zu schnell zu einem Druckanstieg in der inneren Vakuumkammer kommt. Auch der Bindemittelanteil im Wärmedämmmaterial für den äußeren Kern ist problematisch, weil die angestrebte Sperrwirkung mit einer Verflüchtigung des Bindemittels entsprechend reduziert wird. Mit dem beschriebenen Aufbau der WO 03/002828 A1 können die baupraktischen Anforderungen an die Nutzungsdauer nicht erfüllt werden. Aus der EP 1 431 686 A1 sind Isolierbehälter für die Speicherung von kälteverflüssigten Gasen bekannt, bei denen die Behälterwand als mit Isoliermaterial befüllte Vakuumkammer ausgebildet ist, welche mit einem bei der Temperatur des zu speichernden Kühlmediums kondensierbaren Gas befüllt werden kann.

Aufgabe der Erfindung ist es, ein Dämmelement für die Gebäudedämmung zu schaffen, welches in einfacher Weise eine besonders wirkungsvolle Dämmung gewährleistet.

Die Aufgabe wird durch ein Dämmelement gemäß Anspruch 1 gelöst. Vorteilhafte Ausgestaltungen sind in den Unteransprüchen angegeben.

Die Erfindung stellt eine Abwendung von der bisherigen klassischen Wärmedämmung von Gebäuden dar und greift den Gedanken der Wärmedämmung mit Vakuumdämmelementen auf. Nach Maßgabe der Erfindung wird ein Dämmelement für die Gebäudedämmung geschaffen, bei dem zwei ineinander geschachtelte Füllkammern verwendet werden, von denen die innere unter Vakuum gesetzt wird und die äußere mit einem Füllgas gefüllt wird. Die Füllkammern sind mit einem Füllmaterial gefüllt, welches eine ausreichende Stabilisierung der die Füllkammer umgebenden Hüllen bewerkstelligt. Dadurch lassen sich die Dämmelemente kostengünstig und in einfacher Weise herstellen. Dies stellt für Gebäudedämmelemente einen maßgeblichen Faktor dar, weil es sich hier um Massenprodukte handelt, und damit um Produkte, die auf dem Markt preiswert präsentiert werden müssen. Mit den erfindungsgemäßen Maßnahmen wird dabei auch eine sehr gute Wärmedämmung erreicht, wobei mindestens Lambda-Werte der Wärmeleitgruppe 020 in Analogie zur DIN V 18165-1:2002-01 erreicht werden können. Das erfindungsgemäße Dämmelement weist somit zwei luftundurchlässige, ineinander geschachtelte Hüllen auf, die jede für sich eine hemmende Wirkung gegen das Hineindiffundieren von Luft in die entsprechende Füllkammer aufweisen. Ein Innendruck in der äußeren Füllkammer kann mittels des Füllgases so eingestellt werden, dass ein Differenzdruck zwischen einer Umgebung des Dämmelements und der äußeren Füllkammer und/oder zwischen der äußeren und inneren Füllkammer als treibende Kraft für das Diffundieren von Luftteilchen in die äußere Füllkammer bzw. von Füllgasteilchen in die innere Füllkammer vorzugsweise möglichst gering ist. Damit erhöht sich insbesondere die Zeitdauer für einen signifikanten Anstieg des Innendrucks in der inneren Füllkammer, was gleichbedeutend mit einer wesentlich verlängerten Nutzungsdauer des erfindungsgemäßen Dämmelements ist.

In besonders zweckmäßiger Weise zeichnet sich als Füllmaterial für das Dämmelement die Verwendung von Mineralwolle aus, die bevorzugt perlenfrei und aus feinen Fasern gebildet ist, so dass sich eine feine Faserstruktur ergibt, was überraschenderweise Vorteile in Bezug auf die Realisierung der Stützfunktion durch das Füllmaterial bringt. Die feinen Fasern weisen dabei ein Maximum der Durchmesserverteilung zwischen etwa 2 und etwa 4 µm auf. Das Maximum der Durchmesserverteilung ist dabei definiert als der Hochpunkt der Verteilungskurve.

Die Mineralwolle ist vorzugsweise bindemittelfrei, wodurch ein Ausgasen des Bindemittels vermieden wird, was zu einem Druckanstieg in den Füllkammern führen würde. Ferner ist die Mineralwolle vorzugsweise zu einer Rohdichte von ≥ 150 kg/m³ verpresst. Die Mineralwolle trägt zur Erhöhung der Stabilität bei und führt zu einer insgesamt preiswerten Herstellung eines solchen Dämmelements. Für die äußere Füllkammer kann aber auch Mineralwolle verwendet werden, die ein Bindemittel aufweist.

Als Mineralwolle eignet sich insbesondere Glaswolle, Steinwolle oder dergleichen.

Alternativ ist das isolierende erste und/oder zweite Füllmaterial durch ein verpresstes Pulver gebildet, welches Zuschlagstoffe aufweisen kann und welches vorzugsweise in einer Dichte von ≥ 150 kg/m³, insbesondere in einem Rohdichtebereich von 150 bis 250 kg/m³ vorliegt. Als verpresstes Pulver eignet sich insbesondere Kieselsäure. Zuschlagstoffe können insbesondere Fasern, Trübungsmittel oder andere mikroporöse Stoffe wie Zeolithe sein.

Das Füllgas wird vorzugsweise so gewählt, dass der Lambda-Wert des Füllgases kleiner oder gleich dem Lambda-Wert von Luft ist. Dies trägt zu einer besonders guten Wärmedämmung durch die äußere Füllkammer bei. Der Innendruck in der äußeren Füllkammer liegt vorzugsweise zwischen 0,1 und 1 bar. Beispielsweise ist der Innendruck in der äußern Füllkammer 0,5 bar, was dem halben Atmosphärendruck entspricht und wodurch ein geringerer Differenzdruck zwischen der Umgebung und der äußeren Füllkammer als im Fall eines innen anliegenden Vakuums besteht. Somit wird der Diffusionsstrom von Gasteilchen in die äußere Füllkammer reduziert. Dies trägt zu einer besonders langen Haltbarkeit des Dämmelements bei. Als Füllgas wird vorzugsweise ein Gas verwendet, das im Wesentlichen besonders große Moleküle aufweist. Dadurch wird die Diffusion der Füllgasmoleküle in die innere Füllkammer trotz einer höheren Druckdifferenz möglichst gering gehalten und somit die ideale Dämmwirkung des Dämmelements möglichst lang aufrecht erhalten. Derartige Füllgase sind beispielsweise Kohlendioxid, Pentan und/oder SF₆.

In vorteilhafter Weise ist der Druck in der inneren Hülle kleiner als 0,3 mbar, vorzugsweise ≤0,1 mbar, eingestellt.

Für den Aufbau der inneren und/oder äußeren Hülle des Dämmelements ist es zweckmäßig, mehrschichtige Hüllen zu verwenden, die alternierend aufgebaut sein können. Bevorzugt sind Hüllen aus einem Verbundaufbau einer Aluminiumschicht und mindestens einer Kunststoffschicht gebildet, insbesondere aus Polyethylen (PE), Polyethylenterephtalat (PET) oder Polypropylen (PP), wobei die Hülle auch aus mehreren miteinander verbundenen Lagen aus dem Verbundaufbau ausgeführt sein kann. Vorzugsweise weist die Kunststoffträgerfolie eine Dicke im Bereich von 6 µm bis 20 µm auf. Insbesondere kann die Aluminiumschicht auch als Metallisierung einer Kunststoffträgerfolie aus derartigen Kunststoffen ausgebildet sein. Ferner können die innere und/oder äußere Hülle einen Verbundaufbau aus jeweils drei unterschiedlichen Hüllschichten aufweisen. Die Schichtenabfolge innerhalb einer der beiden Hüllen kann sich dabei einmal oder mehrmals wiederholen.

Alternativ dazu kann die äußere Hülle Glas umfassen, insbesondere in Form von Glasscheiben auf den beiden Großflächen. Diese sind miteinander über einen Randverbund gasdicht ausgeführt ("Glashülle"), wobei dieser Randverbund auch aus Glas bestehen kann, so dass insgesamt ein Glaskasten gebildet ist. Die Glasscheiben weisen vorzugsweise eine Dicke zwischen 3 und 10 mm auf. Glasscheiben sind über eine lange Zeitdauer absolut gasdicht, beispielsweise über 100 Jahre. Ferner können zur Herstellung der Glashülle oder des Glaskastens sehr stabile Formteile verwendet werden, die eine hohe Steifigkeit, Stabilität und Widerstandsfestigkeit gegen mechanische Beanspruchung gewährleisten.

Eine Fassadenoptik eines Gebäudes, das mit den Dämmelementen isoliert ist, kann durch die Dämmelemente mit der Glashülle oder dem Glaskasten günstig beeinflusst und/oder bestimmt werden, indem eine bei bestimmungsgemäßem Gebrauch des Dämmelements nach außen weisende Hauptfläche des Glaskastens entsprechend der gewünschten Fassadenoptik beschichtet ist, insbesondere bei einer vorgehängten Fassade.

Zum Schutz der äußeren Hülle kann diese mit einem weiteren Körper gekoppelt sein. Geeignet dafür sind insbesondere Dämmelemente aus Mineralwolle oder Schäumen, mit denen zugleich ein Sandwich-Dämmelement realisiert ist, also ein Dämmelement, das mehrere Schichten aus unterschiedlichen Komponenten aufweist. Insbesondere kann das Dämmelement in einem Isolierkörper aus diesen Materialien eingebettet sein. Der Körper kann alternativ dazu auch aus einem anderen stabilisierenden und/oder schützenden Material gebildet sein.

In einer weiteren vorteilhaften Ausgestaltung ist das Dämmelement plattenförmig ausgebildet. Dies ermöglicht in einfacher Weise das Dämmen großer Flächen. Dazu können beispielsweise die einzelnen plattenförmigen Dämmelemente Stoß an Stoß mit flachen Seiten aneinander gelegt werden. Alternativ dazu können an den Seiten der Dämmelemente Nuten und Federn vorgesehen sein, die bei einem Verlegen der Dämmelemente ineinander eingreifen.

Im Übrigen zeichnet sich die Erfindung durch ein einfaches Herstellungsverfahren aus, bei dem zumindest das isolierende zweite Füllmaterial aus Mineralwolle bindemittelfrei bei hohen Temperaturen im Bereich von 350 bis 550°C verpresst wird. Bei dem Verpressen des isolierenden ersten Füllmaterials kann aufgrund des Füllgases Bindemittel verwendet werden. Alternativ dazu kann bei dem isolierenden ersten Füllmaterial auf das Verpressen verzichtet werden und ein Standard-Mineralwolleprodukt verwendet werden. Dergestalt hergestellte verfestigte Füllkörper aus Mineralwolle oder Füllkörper aus verpresstem Pulver, insbesondere Kieselsäure, werden dann mit einer entsprechenden Hüllschicht verkleidet, die mehrlagig oder mehrschichtig aufgebaut sein kann. Hierbei wird beispielsweise eine folienartige Hülle verwendet, wobei ein Hüllenteil von oben und ein Hüllenteil von unten an den verpressten Füllkörper aufgebracht wird und randseitig des Füllkörpers zusammengeführt wird. Von den Schmalseiten des Füllkörpers vorstehende Laschen der Hülle werden dann miteinander vakuumdicht verbunden, was durch Schweißen, insbesondere Vakuumverschweißen, durch Kleben oder in sonst geeigneter Weise erfolgen kann. Die Verbindung der beiden Folienlagen ist vakuumdicht, so dass die entsprechende durch die Hülle eingeschlossene Füllkammer vakuumisiert bzw. mit dem Füllgas gefüllt werden kann und der entsprechende Innendruck über eine lange Gebrauchsdauer aufrecht erhalten werden kann.

Nach Bildung der inneren Hülle erfolgt das Aufbringen des ersten Füllmaterials auf mindestens eine Teilfläche der Innenhülle, wozu fertige Füllkörper verwendet werden können, die geeignet hergerichtet sind. Danach erfolgt das Aufbringen der äußeren Hülle beispielsweise analog der Verfahrensweise des Aufbringens der inneren Hülle um den Füllkörper. Alternativ dazu kann die äußere Hülle durch die Glashülle oder den Glaskasten gebildet sein. Im Fall der Glashülle werden die beiden auf den Großflächen angeordneten Glasscheiben über einen Randverbund gasdicht abgedichtet. Bei Verwendung des Glaskastens werden zu dessen Herstellung vorzugsweise mindestens zwei Glasscheiben durch Verschweißen, Verkleben oder Heißverschmelzung miteinander verbunden. Hierzu eignet sich insbesondere die Verwendung von Bleikristallglas, was den Herstellungsprozess vereinfacht.

Mit dem Aufbringen des zweiten Füllkörpers und der zweiten Hülle wird eine Barriereschicht um die innen liegende Hülle erreicht. Hierbei ist es zweckmäßig, dass das Volumen des inneren Füllkörpers größer als das Volumen des äußeren Füllkörpers ist. Insbesondere ist es bevorzugt, dass bezogen auf die Dicke des Dämmelements die Dicke des inneren Füllkörpers mehr als 50 % der Dicke des Dämmpaneels, insbesondere bevorzugt 60 bis 70 % der Stärke bzw. Dicke des Dämmpaneels beträgt. Zur Reduzierung der sich mit ansteigendem Innendruck in der äußeren Füllkammer ausbildenden Wärmebrücken an allen vier Seitenflächen ist es bevorzugt, dass die Materialstärke des ersten Füllmaterials als Abstand der jeweiligen Seitenfläche von innerer zu äußerer Hülle so gering wie möglich ist, wobei auch die innere und die äußere Hülle aneinander anliegen können.

Im Sinne einer Pufferwirkung ist es nach Maßgabe der Erfindung vorteilhaft, wenn das äußere Volumen für die Aufnahme des äußeren Füllkörpers ausreichend groß ist, insbesondere das Volumen bis zu 50 % der Dicke des Dämmpanels nach der Herstellung bzw. im Einbauzustand, insbesondere aber 30-40 % der Stärke bzw. Dicke des Dämmpanels beträgt. Dies ist deswegen zweckmäßig, weil auch bei Verwendung von hochvakuumdichten Folien für den inneren und äußeren Kern gleichwohl ein sehr geringer diffusionsbedingter Masseaustausch von innen nach außen nie ganz verhindert werden kann. Mit entsprechend größerem Volumen der äußeren Kammer ist somit die Aufrechterhaltung des Vakuums in der inneren Füllkammer auch eingedenk eines gewissen nie ganz ausgeschlossenen diffusionsbedingten Massenstromes über lange Einsatzzeiten gewährleistet, nämlich bspw. bis zu 100 Jahre und darüber. Schließlich ist es mit Hinsicht auf das eingebettete erste und zweite Füllmaterial zweckmäßig, dass die Füllkörper die entsprechendeṅ Hohlräume vollständig ausfüllen und damit vorzugsweise vollflächig an den jeweiligen Hüllen anliegen.

Zweckmäßige Ausführungsbeispiele der Erfindung sind im Folgenden anhand von schematischen Zeichnungen näher erläutert.

Es zeigen:
- Fig. 1: einen Schnitt durch eine erste Ausführungsform eines Dämmelements;
- Fig. 2: die erste Ausführungsform des Dämmelements mit einem Körper gekoppelt;
- Fig. 3: einen Schnitt durch eine Schichtfolge einer Hülle der ersten Ausführungsform des Dämmelements;
- Fig. 4: eine Teilansicht des Hüllenaufbaus der ersten Ausführungsform des Dämmelements;
- Fig. 5: eine zweite Ausführungsform des Dämmelements sowie
- Fig. 6: eine Darstellung eines Stoßbereichs benachbarter Dämmplatten.

Elemente gleicher Konstruktion oder Funktion sind hierbei figurenübergreifend mit den gleichen Bezugszeichen gekennzeichnet.

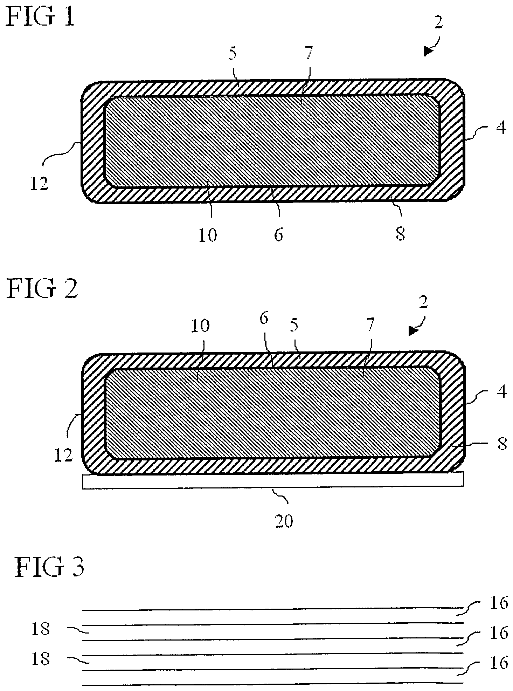

Ein Dämmelement 2 (Fig. 1) umfasst eine äußere Hülle 4 und eine innere Hülle 6, die jeweils eine äußere und innere Füllkammer 5 und 7 bilden. In der äußeren Hülle 4 ist ein isolierendes erstes Füllmaterial 8 eingebettet. Die innere Hülle 6 ist in dem isolierenden ersten Füllmaterial 8 eingebettet. In der inneren Hülle 6 ist ein isolierendes zweites Füllmaterial 10 eingebettet. Die äußere Hülle 4 ist vakuumdicht versiegelt und kann dazu beispielsweise an einer Schweißnaht 12 vakuumdicht verschweißt sein. Die innere Hülle 6 ist ebenfalls vakuumdicht versiegelt und kann dazu über eine entsprechende weitere Schweißnaht vakuumdicht verschweißt sein. Die innere Füllkammer 7 ist evakuiert. Das bedeutet in diesem Zusammenhang, dass ein Luftdruck in der entsprechenden Füllkammer 5, 7 wesentlich kleiner als der Normaldruck ist. Beispielsweise ist der Druck im Inneren der inneren Füllkammer 7 kleiner als 0,3 Millibar. Der Druck kann jedoch auch kleiner oder gleich 0,1 Millibar sein. Die äußere Füllkammer 5 ist mit einem Füllgas gefüllt. Ein Innendruck in der äußeren Füllkammer 5 liegt vorzugsweise zwischen 0,1 und 1 bar. Vorzugsweise ist der Innendruck in der äußeren Füllkammer etwa 0,5 bar und entspricht somit dem halben Atmosphärendruck. Damit wird ein etwa gleicher Differenzdruck einerseits zwischen der Umgebung des Dämmelements 2 und der äußeren Füllkammer 5 und andererseits zwischen der äußeren Füllkammer 5 und der inneren Füllkammer 7 eingestellt, was dazu beiträgt, dass die jeweiligen Diffusionsströme reduziert sind und wenig Luftteilchen aus der Umgebung in die äußere Füllkammer 5 hineindiffundieren sowie wenige Luftteilchen oder Füllgasteilchen aus der äußeren Füllkammer 5 in die innere Füllkammer 7 hineindiffundiert. Vorzugsweise ist die innere Hülle 6 vollständig von dem isolierenden ersten Füllmaterial 8 umgeben. Die schmalen Seite, die die großen Hauptflächen des Dämmelements 2 verbinden, sind vorzugsweise parallel zu den Hauptflächen möglichst schmal ausgebildet, insbesonderes ≤ 30 mm, vorzugsweise ≤ 20 mm.

Das Diffundieren von Füllgasteilchen in die innere Füllkammer 7 kann weiter reduziert werden, wenn als Füllgas ein Gas verwendet wird, das im Wesentlichen besonders große Moleküle hat. Daher eignet sich als Füllgas besonders gut Kohlendioxid, Pentan und/oder SF₆.

Das isolierende erste und/oder zweite Füllmaterial 8, 10 umfasst vorzugsweise Mineralwolle. Als Mineralwolle kann Glaswolle verwendet werden das biolöslich und weitgehend perlenfrei ist sowie sich in sehr feine Fasern zerfasern lässt. Alternativ kann das isolierende erste und/oder zweite Füllmaterial 8, 10 auch aus Steinwolle gebildet sein.

Die isolierenden Füllmaterialien besitzen Stützfunktion und verhindern, dass sich das Dämmelement 2 beim Evakuieren verformt, stattdessen vielmehr dimensionsstabil bleibt. Ferner tragen das Vakuum der inneren Füllkammer 7, das Füllgas in der äußeren Füllkammer 5 und die isolierenden Füllmaterialien 8, 10 dazu bei, dass mit dem Dämmelement 2 eine besonders gute Wärmedämmung erzielt werden kann, insbesondere wenn ein Lambda-Wert des äußeren Füllgases kleiner oder gleich dem Lambda-Wert von Luft ist. Es lassen sich damit mindestens Lambda-Werte für die Wärmeleitgruppe 020 in Analogie zur DIN V 18165-1:2002-01 erzielen. Der Faserverlauf der Mineralwolle in den Füllkammern 5, 7 ist vorzugsweise parallel zu den Hauptflächen.

Alternativ dazu kann das isolierende erste Füllmaterial 8 ein gepresstes Pulver umfassen oder insgesamt daraus gebildet sein (Fig. 2). Als gepresstes Pulver findet vorzugsweise Kieselsäure Verwendung. Die Rohdichte des gepressten Pulvers in der äußeren Hülle 4 liegt vorzugsweise zwischen 150 und 250 kg/m³.

Die Mineralwolle, die insbesondere für die innere Füllkammer 7 unter erhöhter Temperatur zu einem stabilisierenden Formkörper verpresst wird, weist dort eine Rohdichte von mindestens 150 kg/m³ auf. Vorzugweise liegt die Mineralwolle in der inneren Füllkammer in einer Rohdichte von mehr als 200, insbesondere mehr als 350 kg/m³ vor. Dies ermöglicht eine gute Dämmung bei einer hohen Formstabilität des Dämmelements 2.

Fig. 2 zeigt ein Dämmelement 2, welches zum Schutz gegen Beschädigungen von außen auf einer der Hauptflächen mit einem weiteren Körper 20, hier beispielsweise in Form einer Holzplatte, versehen ist. Selbstverständlich kann ein zweiter Körper auf der gegenüberliegenden Hauptfläche angeordnet sein. Als Material für den Körper 20 kann alternativ auch Gummi, Sperrholz, Mineralwolle, eine Gipsplatte, Schaumstoff und/oder ein Verbundmaterial aus den genannten Materialien verwendet werden. Ferner kann das Dämmelement 2 in den Körper 20 aus zumindest einem der Materialien eingebetet sein. Der Körper 20 kann beispielsweise eine Dicke von 4 mm bis 25 mm aufweisen.

Insgesamt hat das Dämmelement 2 beispielsweise eine Breite zwischen 0,5 und 1,00 m und eine Länge zwischen 0,5 und 2 m. Vorzugsweise hat das Dämmelement 2 eine Bemaßung, die im Baugewerbe für Dämmplatten üblich ist, beispielsweise 0,625 auf 1,25 m. Die Dicke des Dämmelements 2 liegt vorzugsweise zwischen 10 und 60 mm oder zusammen mit dem Körper 20 beispielsweise zwischen 30 und 100 mm, vorzugsweise zwischen 40 und 80 mm.

Die äußere und/oder die innere Hülle 4, 6 weisen beispielsweise eine Schichtenfolge aus unterschiedlichen Hüllschichten auf (Fig.3). Beispielsweise wechseln sich in der Schichtenfolge eine erste Hüllschicht 16 und eine zweite Hüllschicht 18 ab. Vorzugsweise umfasst die erste Hüllschicht 16 Aluminium, welches sich durch einen besonders große Gasundurchlässigkeit auszeichnet, insbesondere gegenüber Wasserdampf, Sauerstoff und dem Füllgas. Die zweite Hüllschicht 18 kann beispielsweise Polyethylen umfassen. Dabei kann die zweite Hüllschicht 18 als Kunststoffträgerfolie ausgebildet sein und die erste Hüllschicht 16 kann als Metallisierung der Kunststoffträgerfolie ausgebildet sein. Das Polyethylen dient zur vakuumdichten Versiegelung der Hüllen. Ferner führt dies zu einem einfachen Herstellungsprozess, da beispielsweise auf eine Polyethylenfolie als zweite Hüllschicht 18 und Kunststoffträgerfolie das Aluminium als erste Hüllschicht 16 gesputtert werden kann. Die Aluminiumschicht kann in einem einlagigen Verbundaufbau aus einer Schicht Aluminum und einer Schicht aus Polyethylen beispielsweise mit einer Dicke von 6 bis 20 µm vorliegen, insbesondere 8 µm. Bei einem mehrlagigen Verbundaufbau, wie beispielsweise in Fig. 3 dargestellt, beträgt die Dicke einer einzelnen Aluminiumschicht bevorzugt zwischen 20 und 100 nm. Alternativ zu dem Polyethylen kann auch Polyethylenterephtalat oder Polypropylen verwendet werden. Die Hüllschichten 16, 18 können sich in ihrer Schichtenabfolge mehrmals wiederholen, so dass eine vielschichtige Hülle 4, 6 geschaffen wird. Zum Schutz der Aluminiumschicht ist vorzugsweise ganz innen und ganz außen eine Kunststoffschicht vorgesehen. Die Kunststoffschicht kann beispielsweise eine Dicke von 20 µm aufweisen. Die Aluminiumschicht kann beispielsweise eine Dicke von 30 bis 80 nm aufweisen.

Ferner kann eine dritte Hüllschicht vorgesehen sein. Beispielsweise kann eine äußerste Hüllschicht aus hoch-dichtem Polyethylen (HD-PE) vorgesehen sein. Das HD-PE dichtet sehr gut ab und kann gut verschweißt werden. Auf die HD-PE Schicht kann dann die Aluminiumschicht folgen. Die Aluminiumschicht kann dann nach innen durch eine einfache Polyethylenschicht geschützt sein, die vorzugsweise sehr reißfest ist und eine geringe Elastizität aufweist. Beispielsweise kann eine 8 µm starke Aluminiumschicht zwischen einer 12 µm starken Kunststofffolie aus Polyethylenterephtalat und einer Kunststofffolie aus 100 µm starkem niedrig-dichtem Polyethylen (PE-LD) eingebettet sein.

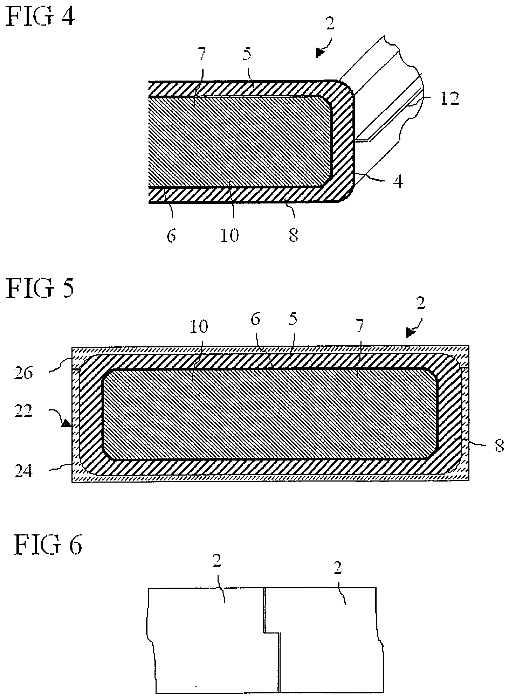

Alternativ dazu umfasst die äußere Hülle Glas und ist beispielsweise durch einen Glaskasten 22 gebildet (Fig. 5). Der Glaskasten 22 umfasst Glasscheiben, die vorzugsweise eine Dicke zwischen 3 und 10 mm aufweisen. Der Glaskasten 22, insbesondere die Glasscheiben, sind über eine lange Zeitdauer absolut gasdicht, beispielsweise über 100 Jahre. Ferner können zur Herstellung des Glaskastens 22 sehr stabile Formteile verwendet werden, die eine hohe Steifigkeit, Stabilität und Widerstandsfestigkeit gegen mechanische Beanspruchung gewährleisten. Beispielsweise ist der Glaskasten 22 durch einen nach oben offenen Kasten 24 und eine Deckelscheibe 26 gebildet, die beispielsweise miteinander verklebt oder durch Heißschmelzen gasdicht verbunden sind.. Der nach oben offene Kasten 22 umfasst eine Glasscheibe und einen außen umlaufenden Steg.

Die äußere und die innere Hülle 4, 6 können sich berühren, ohne dass ein signifikanter Dämmverlust auftritt. Beispielsweise können sich alle Seiten der beiden Hüllen 4, 6 bis auf eine der beiden Hauptflächen berühren. Das isolierende erste Füllmaterial 8 ist dann zwischen den beiden sich nicht berührenden Hauptflächen eingebettet.

Eine Fassadenoptik eines Bauwerks, das mittels mehrerer Dämmelemente 2 gedämmt ist, wird einfach und günstig beeinflusst und/oder bestimmt, indem eine bei bestimmungsgemäßem Gebrauch des Dämmelements 2 nach außen weisende Hauptfläche des Glaskastens 22 entsprechend beschichtet ist, insbesondere bei einer vorgehängten Fassade. Beispielsweise kann die Beschichtung eine vorgegeben Farbe oder Verspiegelung umfassen.

Eine ausreichende Stabilität des zweiten Füllmaterials 10 im Fall von Mineralwolle zum Zweck der Formstabilität des Dämmelements 2 gegen den darauf wirkenden Außendruck wird vorzugsweise dadurch erzielt, dass die Mineralwolle bindemittelfrei bei einer hohen Temperatur verpresst wird, beispielsweise bei 350° bis 550° Celsius. Auch das erste Füllmaterial 8 kann entsprechend dem zweiten Füllmaterial 10 hergestellt werden. Alternativ dazu kann aufgrund des Füllgases als erstes Füllmaterial ein Standard-Mineralwollprodukt verwendet werden, das insbesondere auch Bindemittel umfassen kann.

Im Falle von bindemittelfreier Mineralwolle kann dies in einer herkömmlichen Presse unter Verwendung zweier zusammenwirkender Formhälften erfolgen, die in einer offenen Struktur ausgelegt sind. Hierzu wird die Mineralwolle in die Form eingelegt, die dann unter Druck und unter erhöhter Temperatur geschlossen wird, um die Mineralwolle zur Bildung des Formkörpers zu verpressen. Hierbei wird im Falle der Mineralwolle durch den Pressvorgang unter erhöhten Temperaturen eine Stützstruktur ausgebildet, die die Formstabilität des Dämmelements 2 gewährleistet. Im Fall der Verwendung von verpresstem Pulver, insbesondere Kieselsäure, kann die Temperung entfallen.

Nach dem Verpressen der Mineralwolle wird diese nach Öffnen der Form aus dieser ausgehoben und es erfolgt eine Ummantelung des Formkörpers durch Aufbringen des Hüllenmaterials. Hierbei ist es zweckmäßig, wenn sowohl für die innere Hülle 6 wie auch für die Formgebung der äußeren Hülle 4 jeweils zwei Hüllenlagen verwendet werden. Der verpresste Formkörper wird hierbei auf eine Lage aufgelegt und die andere Hüllenlage wird von oben auf den Formkörper aufgebracht. Die beiden Hüllenlagen werden dann im Bereich der Schmalseiten des Formkörpers zusammengeführt und miteinander verschweißt, verklebt oder in sonst einer geeigneten Weise vakuumdicht rundum geschlossen. Vor dem vakuumdichten Verschließen der äußeren Hülle 4 wird das Füllgas der äußeren Füllkammer 5 nach deren Evakuierung bis zum gewünschten Innendruck zugegeben.

Figur 4 zeigt eine Teilansicht eines Dämmelements 2 zur Darstellung der beiden Hüllenlagen, die im Bereich der Schmalseite des Formkörpers an der Schweißnaht 12 laschenartig zusammengeführt und dort verschweißt oder verklebt sind. Zum Zwecke der Montage werden die überstehenden Flansche oder Laschen in Anlage an die Schmalseite des Dämmelements 2 gebracht, so dass Dämmelemente 2 aneinanderstoßend verlegt werden können.

Hierzu zeigt Figur 6 einen Stoßbereich zweier benachbarter Dämmelemente 2 in Art eines Stufenfalzes im Bereich der Stoßstelle, so dass sich eine gewisse Überlappung ergibt und im Stoßstellenbereich auch die für die vakuumdichte Verbindung nach außen vorstehenden und umgeklappten Laschen aufgenommen sein können. Dadurch wird der Bildung von Wärmebrücken entgegengewirkt.

Bei dem Glaskasten 22 als äußere Hülle 4 werden mindestens zwei Glasscheiben miteinander verschweißt oder verklebt. Beispielsweise wird die Deckelscheibe 26 mit dem Steg der Glasscheibe des nach oben offenen Kastens 24 gasdicht und fest verbunden. Der Steg kann mit der Glasscheibe des nach oben offenen Kastens 24 verklebt oder verschweißt werden. Alternativ dazu kann der Steg integral mit der Glasscheibe des nach oben offenen Kastens 24 hergestellt werden. Zum Verschweißen wird beispielsweise Bleikristallglas verwendet. Dabei treten Temperaturen von beispielsweise 600° Celsius auf.

Die Erfindung ist nicht auf die angegebenen Ausführungsbeispiele beschränkt. Beispielsweise kann als erstes und als zweites Füllmaterial 8,10 Mineralwolle vorgesehen sein und das Dämmelement 2 kann mit dem Körper 20 gekoppelt sein. Ferner können in der inneren Hülle 6 zusätzlich zu dem isolierenden zweiten Füllmaterial 10 Getter vorgesehen sein, die zum Binden freier Gasteilchen innerhalb der inneren Hülle 6 dienen. Als Gettermaterial eignet sich beispielsweise Aktivkohle oder Zeolithe. Ferner kann der Glaskasten 22 mit dem Körper 20 gekoppelt sein.

## Patentansprüche

1. Dämmelement (2) für die Dämmung von Gebäuden, insbesondere Fassaden, Decken, Wänden und Dächern, mit einer äußeren Hülle (4), die vakuumdicht versiegelt ist und eine äußere Füllkammer (5) bildet, in der ein isolierendes erstes Füllmaterial (8) eingebettet ist, und mit einer inneren Hülle (6), die in dem isolierenden ersten Füllmaterial (8) der äußeren Hülle (4) eingebettet ist sowie eine innere Füllkammer (7) bildet, in der ein isolierendes zweites Füllmaterial (10) eingebettet ist, wobei die innere Hülle (6) vakuumdicht versiegelt und die innere Füllkammer (7) evakuiert ist, **dadurch gekennzeichnet, dass** die äußere Füllkammer (5) mit einem Füllgas gefüllt ist.

2. Dämmelement nach Anspruch 1, **dadurch gekennzeichnet, dass** das Füllmaterial der inneren und/oder äußeren Füllkammer (5,7) aus Mineralwolle oder vorgepresstem Pulver gebildet ist.

3. Dämmelement nach einem der vorhergehenden Ansprüche, **dadurch gekennzeichnet, dass** die Mineralwolle Glaswolle oder Steinwolle umfasst.

4. Dämmelement nach Anspruch 2 oder 3, **dadurch gekennzeichnet, dass** die Mineralwolle bindemittelfrei ist und eine Rohdichte ≥ 150 kg/m³ aufweist.

5. Dämmelement nach Anspruch 2 oder 3, **dadurch gekennzeichnet, dass** die Mineralwolle in der äußeren Füllkammer ein Bindemittel aufweist.

6. Dämmelement (2) nach Anspruch 4, **dadurch gekennzeichnet, dass** die Mineralwolle in zumindest einer der beiden Hüllen (4, 6) eine Rohdichte von ≥ 200 kg/m³, vorzugsweise ≥ 350 kg/m³ aufweist.

7. Dämmelement nach einem der Ansprüche 2 bis 6, **dadurch gekennzeichnet, dass** die Mineralwolle im Wesentlichen perlenfrei vorliegt und/oder aus feinen Fasern mit einem Maximum der Durchmesserverteilung zwischen etwa 2 µm und etwa 4 µm gebildet sind.

8. Dämmelement (2) nach einem der vorstehenden Ansprüche, **dadurch gekennzeichnet, dass** der Innendruck in der äußeren Füllkammer (5) zwischen 0,1 und 1 bar ist, insbesondere 0,5 bar beträgt.

9. Dämmelement (2) nach einem der vorstehenden Ansprüche, **dadurch gekennzeichnet, dass** in der inneren Hülle (4, 6) ein Luftdruck kleiner oder gleich 0,3 Millibar, bevorzugt ≤ 0,1 Millibar eingestellt ist.

10. Dämmelement (2) nach einem der vorstehenden Ansprüche, **dadurch gekennzeichnet, dass** die innere und/oder äußere Hülle (4, 6) mehrschichtig aufgebaut sind, wobei vorzugsweise die innere und/oder äußere Hülle (4, 6) jeweils drei unterschiedliche Hüllschichten umfassen, deren Schichtenabfolge sich mindestens einmal innerhalb einer der beiden Hüllen (4, 6) wiederholt.

11. Dämmelement (2) nach einem der vorstehenden Ansprüche, **dadurch gekennzeichnet, dass** die äußere Hülle (4) Glas umfasst, wobei vorzugsweise die äußere Hülle (4) Glasscheiben umfasst, die eine Dicke zwischen 3 und 10 mm aufweisen.

12. Dämmelement (2) nach Anspruch 11, **dadurch gekennzeichnet, dass** die äußere Hülle (4) durch eine Glashülle oder einen Glaskasten (22) gebildet ist.

13. Dämmelement (2) nach Anspruch 11 oder 12, **dadurch gekennzeichnet, dass** eine bei bestimmungsgemäßem Gebrauch des Dämmelements (2) nach außen weisende Hauptfläche beschichtet ist.

14. Dämmelement (2) nach einem der vorstehenden Ansprüche, **dadurch gekennzeichnet, dass** das Dämmelement (2) plattenförmig ausgebildet ist.

15. Dämmelement (2) nach einem der vorstehenden Ansprüche, **dadurch gekennzeichnet, dass** die innere Füllkammer (7) ein Gettermaterial aufweist.

## Claims

1. An insulation element (2) for the insulation of buildings, particularly facades, ceilings, walls and roofs, with an outer sleeve (4) which is sealed vacuum-tight and forms an outer filling chamber (5) in which an isolating first filling material (8) is embedded, and with an inner sleeve (6) which is embedded in the isolating first filling material (8) of the outer sleeve (4) as well as forms an inner filling chamber (7) in which an isolating second filling material (10) is embedded, with the inner sleeve (6) being sealed vacuum-tight and the inner filling chamber (7) being evacuated, **characterized in that** the outer filling chamber (5) is filled with a filling gas.

2. The insulation element according to claim 1, **characterized in that** the filling material of the inner and/or outer filling chamber (5, 7) is formed of mineral wool or pre-pressed powder.

3. The insulation element according to one of the preceding claims, **characterized in that** the mineral wool comprises glass wool or rock wool.

4. The insulation element according to claim 2 or 3, **characterized in that** the mineral wool is binder-free and has a raw density ≥ 150 kg/m³.

5. The insulation element according to claim 2 or 3, **characterized in that** the mineral wool in the outer filling chamber has a binder.

6. The insulation element (2) according to claim 4, **characterized in that** the mineral wool has a raw density of ≥ 200 kg/m³, preferably 350 kg/m³ at least in one of the two sleeves (4, 6).

7. The insulation element according to one of the claims 2 to 6, **characterized in that** the mineral wool is essentially free of pearls and/or formed of fine fibers with a maximum of the diameter distribution between about 2 µm and about 4 µm.

8. The insulation element (2) according to one of the preceding claims, **characterized in that** the inner pressure in the outer filling chamber (5) is between 0.1 and 1 bar, in particular 0.5 bar.

9. The insulation element (2) according to one of the preceding claims, **characterized in that** in the inner sleeve (4, 6), an air pressure is set to less than or equal to 0.3 millibar, preferably ≤ 0.1 millibar.

10. The insulation element (2) according to one of the preceding claims, **characterized in that** the inner and/or outer sleeve (4, 6) has a multilayer configuration, with preferably the inner and/or outer sleeve (4, 6) each comprising three different sleeve layers, the layer sequence of which repeats at least once within one of the two sleeves (4, 6).

11. The insulation element (2) according to one of the preceding claims, **characterized in that** the outer sleeve (4) comprises glass, with the outer sleeve (4) preferably comprising glass sheets having a thickness of between 3 and 10 mm.

12. The insulation element (2) according to claim 11, **characterized in that** the outer sleeve (4) is formed by a glass sleeve or a glass box (22).

13. The insulation element (2) according to claim 11 or 12, **characterized in that** a main surface which faces to the outside when the insulation element (2) is used as intended is layered.

14. The insulation element (2) according to one of the preceding claims, **characterized in that** the insulation element (2) is formed plate-shaped.

15. The insulation element (2) according to one of the preceding claims, **characterized in that** the inner filling chamber (7) has a getter material.

## Revendications

1. Elément d'isolation (2) destiné à isoler des bâtiments, notamment des façades, des plafonds, des murs et des toits, ledit élément d'isolation comprenant une coque extérieure (4), qui est scellée de façon étanche au vide et qui forme une chambre de remplissage extérieure (5) dans laquelle est incorporé un premier matériau de remplissage isolant (8), et une coque intérieure 6) qui est incorporée dans le premier matériau de remplissage isolant (8) de la coque extérieure (4) et qui forme une chambre de remplissage intérieure (7) dans laquelle est incorporé un second matériau de remplissage isolant (10), la coque intérieure (6) étant scellée de façon étanche au vide et la chambre de remplissage intérieure (7) étant mise sous vide, **caractérisé en ce que** la chambre de remplissage extérieure (5) est remplie d'un gaz de remplissage.

2. Elément d'isolation selon la revendication 1, **caractérisé en ce que** le matériau de remplissage des chambres de remplissage intérieure et/ou extérieure (5, 7) est formé de poudre de pré-compactée ou de laine minérale.

3. Elément d'isolation selon l'une des revendications précédentes, **caractérisé en ce que** la laine minérale englobe la laine de verre ou la laine de roche.

4. Elément d'isolation selon la revendication 2 ou 3, **caractérisé en ce que** la laine minérale est exempte de liant et a une densité apparente de ≥ 150 kg/m³.

5. Elément d'isolation selon la revendication 2 ou 3, **caractérisé en ce que** la laine minérale dans la chambre de remplissage extérieur comporte un liant.

6. Elément d'isolation (2) selon la revendication 4, **caractérisé en ce que** la laine minérale dans au moins une des deux coques (4, 6) a une densité apparente ≥ 200 kg/m³, de préférence ≥ 350 kg/m³.

7. Elément d'isolation selon l'une des revendications 2 à 6, **caractérisé en ce que** la laine minérale est sensiblement dépourvue de billes et/ou est formée de fines fibres ayant une distribution de diamètres maximale comprise entre environ 2 µm et environ 4 µm.

8. Elément d'isolation (2) selon l'une des revendications précédentes, **caractérisé en ce que** la pression interne dans la chambre de remplissage extérieure (5) est comprise entre 0,1 et 1 bar, notamment 0,5 bar.

9. Elément d'isolation (2) selon l'une des revendications précédentes, **caractérisé en ce que** la pression d'air dans la coque interne (4, 6) est réglée pour être inférieure ou égale à 0,3 millibar, de préférence ≤ 0,1 millibar.

10. Elément d'isolation (2) selon l'une quelconque des revendications précédentes, **caractérisé en ce que** la coque intérieure et/ou la coque extérieure (4, 6) ont une structure multicouche, la coque intérieure et/ou la coque extérieure (4, 6) comportant chacune de préférence trois couches de coque différentes dont la séquence de couches se répète au moins une fois à l'intérieur de l'une des deux coques (4, 6).

11. Elément d'isolation (2) selon l'une des revendications précédentes, **caractérisé en ce que** la coque extérieure (4) comporte du verre, et de préférence la coque extérieure (4) comportant des plaques de verre ayant une épaisseur comprise entre 3 et 10 mm.

12. Elément d'isolation (2) selon la revendication 11, **caractérisé en ce que** la coque extérieure (4) est formée par une coque en verre ou une boîte de verre (22).

13. Elément d'isolation (2) selon la revendication 11 ou 12, **caractérisé en ce qu'**une face principale, dirigée vers l'extérieur dans les conditions normales d'utilisation de l'élément isolant (2), est pourvue d'un revêtement.

14. Elément d'isolation (2) selon l'une des revendications précédentes, **caractérisé en ce que** l'élément d'isolation (2) est réalisé sous la forme d'un panneau.

15. Elément d'isolation (2) selon l'une des revendications précédentes, **caractérisé en ce que** la chambre de remplissage intérieure (7) comporte un matériau getter.
